# EUROPÄISCHE PATENTSCHRIFT

(11) **EP 3 875 218 B1**
(45) Veröffentlichungstag und Bekanntmachung des Hinweises auf die Patenterteilung: **03.04.2024**
(21) Anmeldenummer: 21155697.2
(22) Anmeldetag: 08.02.2021
(51) Int. Cl.: B23Q 17/24, G06K 19/06

(54) **VERFAHREN UND VORRICHTUNG ZUR BESTIMMUNG DER RELATIVEN POSITION ZWISCHEN EINEM OBJEKT UND EINEM DETEKTOR**
METHOD AND DEVICE FOR DETERMINING THE RELATIVE POSITION BETWEEN AN OBJECT AND A DETECTOR
PROCÉDÉ ET DISPOSITIF DE DÉTERMINATION DE LA POSITION RELATIVE ENTRE UN OBJET ET UN DÉTECTEUR

(30) Priorität: 06.03.2020 DE 102020202914
(43) Veröffentlichungstag der Anmeldung: 08.09.2021
(73) Patentinhaber: Pepperl+Fuchs SE, 68307 Mannheim (DE)
(72) Erfinder: Kirsch, Martin, 68542 Heddesheim (DE)
(74) Vertreter: Ullrich & Naumann PartG mbB

(56) Entgegenhaltungen:
- DE-A1-102015 205 738
- DE-A1-102018 208 203
- JP-A- H04 361 103
- US-A1- 2008 283 610

## Beschreibung

Die Erfindung betrifft ein Verfahren zur Bestimmung der relativen Position zwischen einem Objekt und einem Detektor, wobei eine Relativbewegung zwischen dem Objekt und dem Detektor in einer Bewegungsrichtung erfolgen kann, wobei das Objekt mehrere unterschiedliche Detektionselemente in einer definierten Anordnung relativ zueinander und relativ zu dem Objekt aufweist, wobei der Detektor ein Lesefenster zum Wahrnehmen von Detektionselementen aufweist und wobei eine Bestimmung der relativen Position zwischen dem Objekt und dem Detektor bei einem Erkennen eines wahrgenommenen Detektionselements - unter Berücksichtigung der bekannten definierten Anordnung der Detektionselemente relativ zueinander und relativ zu dem Objekt - mittels des Detektors oder mittels einer mit dem Detektor zusammenwirkenden Bestimmungseinrichtung erfolgt.

Des Weiteren betrifft die vorliegende Erfindung eine Vorrichtung zur Durchführung eines Verfahrens zur Bestimmung der relativen Position zwischen einem Objekt und einem Detektor, wobei eine Relativbewegung zwischen dem Objekt und dem Detektor in einer Bewegungsrichtung erfolgen kann, wobei das Objekt mehrere unterschiedliche Detektionselemente in einer definierten Anordnung relativ zueinander und relativ zu dem Objekt aufweist, wobei der Detektor ein Lesefenster zum Wahrnehmen von Detektionselementen aufweist und wobei eine Bestimmung der relativen Position zwischen dem Objekt und dem Detektor bei einem Erkennen eines wahrgenommenen Detektionselements - unter Berücksichtigung der bekannten definierten Anordnung der Detektionselemente relativ zueinander und relativ zu dem Objekt - mittels des Detektors oder mittels einer mit dem Detektor zusammenwirkenden Bestimmungseinrichtung durchführbar ist Verfahren und Vorrichtungen zur Bestimmung der relativen Position zwischen einem Objekt und einem Detektor sind zum Beispiel aus DE102018208203 A1 aus der Praxis bekannt.

Darüber hinaus sind aus der WO 2017/045704 A1 ein Verfahren und eine Vorrichtung zur sicheren Positionserkennung bekannt. Dabei erfolgt eine sichere Positionsbestimmung mittels eines als Kamerasystem ausgebildeten Detektors in Zusammenwirkung mit einer mehrfarbigen Beleuchtung sowie Detektionselemente bildenden farbigen Codes.

Fig. 7 zeigt den aus der WO 2017/045704 A1 bekannten Aufbau zur sicheren Positionsbestimmung, wobei als Codes C1 und C2 ausgebildete Detektionselemente 2, 3 auf einem als Objekt 4 dienenden weißen Träger T1 aufgebracht sind. Code C1 ist mit roter Farbe und Code C2 mit grüner Farbe gedruckt. Lampen L1 und L2 beleuchten mit unterschiedlichen Farben, beispielsweise L1 grün und L2 rot. Ein als Kamera ausgebildeter Detektor 1 kann den Code nur erkennen, wenn dieser mit einer passenden Farbe beleuchtet wird. Ein grüner Code wird beispielsweise nur bei roter Beleuchtung erkannt - der grüne Code erscheint dabei dunkel - und umgekehrt. Für jede Farbe ergibt sich somit ein anderer Code. Eine Steuerungseinheit S1 steuert die Beleuchtung und vergleicht den von der Kamera erkannten Code E1 mit dem aufgrund der vorgegebenen Beleuchtungsfarbe erwarteten Code. Die Steuerungseinheit S1 kann erkennen, ob die Kamera und die Software korrekt arbeiten. Damit geben die erkannten Codes eine sichere Position wieder.

Zur praktischen Umsetzung der sicheren Erkennung von Codes und damit einer sicheren Positionsbestimmung sei noch das Folgende angemerkt. Solange sich der Detektor bzw. die Kamera und der Code relativ zueinander bewegen, ist eine sichere Erkennung auch mit einfarbigen Codes und/oder einfarbiger Beleuchtung möglich. Da eine Bewegung stattfindet, ändert sich der Code mit dem Verlauf der Zeit. Sollte trotz Relativbewegung zwischen Detektor bzw. Kamera und Code immer der gleiche Code erkannt werden, so liegt ein Fehler vor, der von der Steuerung erkannt werden kann, wenn diese Informationen über die Relativbewegung hat und zur Auswertung heranzieht. Problematisch ist eine sichere Erkennung im Falle des Stillstands, da sich hier der Code nicht mehr aufgrund der Relativbewegung ändert. Sollte hier ein Einfrieren des Kamerabilds stattfinden, könnte eine sich anschließende Relativbewegung nicht mehr festgestellt werden. In diesem Fall kann beispielsweise ein Einfrieren des Kamerabilds durch Codes mit mehreren Farben und eine alternierende Beleuchtung mit passenden unterschiedlichen Farben bzw. Wellenlängen - wie in der WO 2017/045704 A1 beschrieben - erkannt werden.

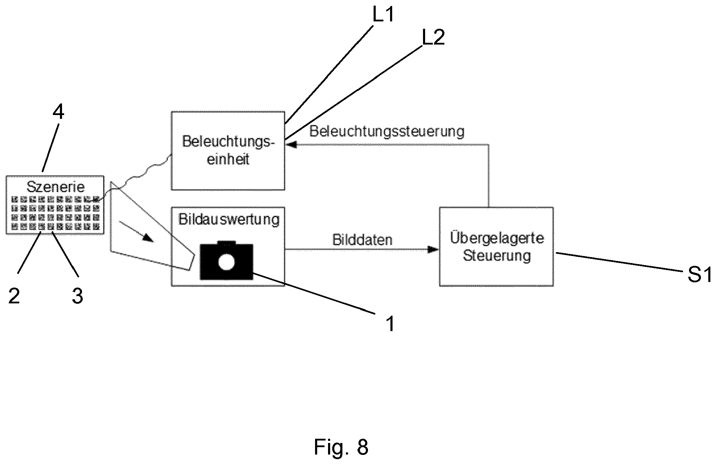

Fig. 8 zeigt eine bekannte Vorrichtung, die im Wesentlichen aus vier Komponenten besteht. Eine Beleuchtungseinheit, die die Szenerie flächig beleuchtet, wobei beispielsweise zwei verschiedene Beleuchtungsfarben oder Beleuchtungswellenlängen eingesetzt werden, um eine Änderung der Szenerie hervorzurufen. Je nach Farbe oder Wellenlänge werden unterschiedliche Detektionselemente in Form von Codes sichtbar, die auf einem Objekt angeordnet sind. Diese Szenerie besteht beispielsweise aus flächig angeordneten Data Matrix Codes. Die Codes werden von einer Erkennungseinrichtung wahrgenommen, die dem als Kamera mit einem Lesefenster ausgebildeten Detektor zugeordnet ist. Eine Bildauswertung decodiert die Codes in der Szenerie. Ein Code aus der Szenerie wird in Form von Bilddaten oder ausgewerteten Codeinhalten oder Codedaten an die überlagerte Steuerung weitergegeben. Die überlagerte Steuerung steuert die Beleuchtungseinheit nach einem pseudozufälligen Muster an. Der erkannte Code, welcher der Steuerung gemeldet wird, wird mit dem Erwartungswert aus der zuvor angesteuerten Beleuchtung verglichen. Hierdurch wird ein gewisses Maß an Sicherheit bei der mittels einer Bestimmungseinrichtung erfolgenden Positionsbestimmung erreicht.

Sämtliche Codes sind mit einer spezifischen Checksumme ausgestattet, welche ebenfalls von der überlagerten Steuerung überprüft wird. Ein gelesener und für korrekt erkannter Code gilt somit als zuverlässig.

Durch Fehler bei einem Bildeinzug kann es vorkommen, dass sich das Bild horizontal oder vertikal verschiebt, obwohl die Codes noch erkannt werden. Daher ist eine Aussage wo sich der Code im Bild befindet, nicht zuverlässig. Die reine Erkennung hingegen ist zuverlässig. Es wird im Folgenden davon ausgegangen, dass ein Code als zuverlässig gilt, sofern er erkannt und an die Steuerung gemeldet wurde.

Neben der in gewissem Maß sicheren Positionserkennung findet eine unsichere Positionserkennung durch das System statt. Sie basiert darauf, dass die Eckpunkte der gefundenen Codes bekannt sind. Anhand dieser Eckpunkte und deren Position innerhalb des Lesefensters kann die genaue Position des Sensors über der Anordnung der Codes oder über einem Codeband berechnet werden, und zwar in Bruchteilen der Größe der Data Matrix Codes. Dabei wird vorausgesetzt, dass die Anordnung der Codes bekannt ist und die Codes alle eindeutig identifizierbar sind.

Zudem kann noch der Winkel zwischen Lesefenster und Codeband berechnet werden. Der sogenannte L-Finder, der durch durchgezogene Bereiche im Rand der Data Matrix Codes gebildet wird, die Ähnlichkeiten zu einem "L" haben, hat eine eindeutige Ausrichtung. Anhand dieser Ausrichtung kann der Winkel bestimmt werden, sofern die Eckpunkte des Data Matrix Codes bestimmt werden können. Dieser berechnete Winkel ist jedoch - wie oben erwähnt - nicht sicher, da ein Fehler in einer Berechnungsroutine zu inkorrekten Werten führen würde, ohne dass dies erkannt werden kann.

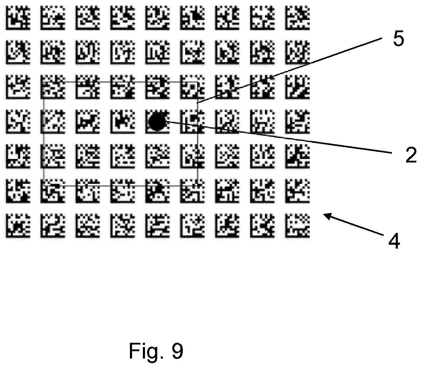

Fig. 9 zeigt eine Szenerie mit einem als flächiges Codeband ausgebildeten Objekt 4. Der leicht außermittige rechteckige Bereich stellt den Bereich dar, den die Kamera oder der Detektor lesen oder wahrnehmen kann. Dieser Bereich wird als Lesefenster 5 bezeichnet. Bei der bekannten Vorrichtung gibt die Kamera genau einen einzigen gefundenen Code 2 an die Steuerung weiter. Dieser Code 2 ist durch einen ausgefüllten Punkt markiert. Innerhalb des Lesefensters der Kamera ist die Position des Codes nicht sicher.

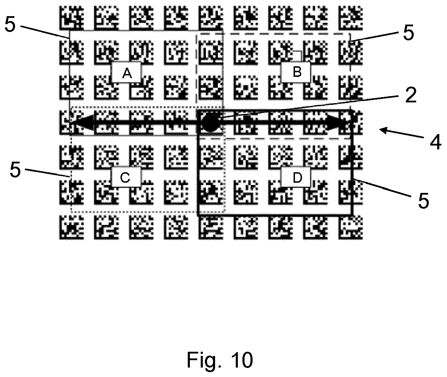

Da sich die Position innerhalb des Lesefensters 5 nicht sicher bestimmen lässt, ist eine genaue Positionsbestimmung nur mit physikalischen Randbedingungen möglich. D. h., dass bei einem erkannten Code 2, die Lage des Codes 2 nur innerhalb der Größe des Lesefensters 5 sicher erkannt wird bzw. bestimmbar ist. Die Positionsunsicherheit beträgt ca. +/- eine halbe Breite bzw. Höhe bzw. Diagonale - falls Drehungen möglich sind - des Lesefensters 5. Hierzu sind in Fig. 10 vier Positionen A, B, C und D von Lesefenstern 5 gezeigt, die alle das gleiche Ergebnis liefern würden, da der Code 2 immer in den Lesefenstern 5 liegt. Insoweit ist hier eine maximale Positionsungenauigkeit bei der sicheren Bestimmung eines Codes 2 gezeigt.

Der vorliegenden Erfindung liegt daher die Aufgabe zugrunde, ein Verfahren und eine Vorrichtung der eingangs genannten Art anzugeben, wonach ein einfaches und sicheres Bestimmen der relativen Position zwischen einem Objekt und einem Detektor mit konstruktiv einfachen Mitteln und mit hoher Genauigkeit ermöglicht ist.

Erfindungsgemäß wird die voranstehende Aufgabe durch ein Verfahren mit den Merkmalen des Anspruchs 1 sowie durch eine Vorrichtung mit den Merkmalen des Anspruchs 15 gelöst.

Danach ist das erfindungsgemäße Verfahren derart ausgestaltet und weitergebildet, dass die Bestimmung der relativen Position zwischen dem Objekt und dem Detektor erst bei einem Erkennen mehrerer durch das Lesefenster gleichzeitig wahrgenommener Detektionselemente erfolgt.

Des Weiteren ist die erfindungsgemäße Vorrichtung derart ausgestaltet und weitergebildet, dass die Bestimmungseinrichtung zur Bestimmung der relativen Position zwischen dem Objekt und dem Detektor erst bei einem Erkennen mehrerer durch das Lesefenster gleichzeitig wahrgenommener Detektionselemente ausgebildet ist.

In erfindungsgemäßer Weise ist zunächst erkannt worden, dass ein besonders sicheres Bestimmen der relativen Position zwischen einem Objekt und einem Detektor durch geschickte Nutzung bereits vorhandener Einrichtungen möglich ist. Hierzu erfolgt in weiter erfindungsgemäßer Weise eine Bestimmung der relativen Position zwischen dem Objekt und dem Detektor nicht schon bei einem Erkennen eines ersten wahrgenommenen Codes, sondern erst bei einem Erkennen mehrerer durch das Lesefenster gleichzeitig wahrgenommener Detektionselemente. Bei der erfindungsgemäßen Vorrichtung ist hierzu die Bestimmungseinrichtung zur Bestimmung der relativen Position zwischen dem Objekt und dem Detektor erst bei einem Erkennen mehrerer durch das Lesefenster gleichzeitig wahrgenommener Detektionselemente ausgebildet. Durch die Bestimmung der relativen Position erst bei einem Erkennen mehrerer durch das Lesefenster gleichzeitig wahrgenommener Detektionselemente wird die Positionsungenauigkeit reduziert, wobei beispielsweise die in Fig. 10 dargestellte große Positionsungenauigkeit erheblich reduziert werden kann, da mehrere Codes, d. h. mindestens zwei Codes in allen dort gezeigten Lesefenstern 5 vorhanden sein müssen.

Folglich ist mit dem erfindungsgemäßen Verfahren und mit der erfindungsgemäßen Vorrichtung ein einfaches und sicheres Bestimmen der relativen Position zwischen einem Objekt und einem Detektor mit konstruktiv einfachen Mitteln und mit hoher Genauigkeit ermöglicht.

Im Hinblick auf eine besonders sichere und einfache Bestimmung der relativen Position kann ein Erkennen eines oder mehrerer durch das Lesefenster wahrgenommener Detektionselemente mittels des Detektors oder mittels einer mit dem Detektor zusammenwirkenden Erkennungseinrichtung erfolgen. Dabei kann die Erkennungseinrichtung zur Bereitstellung einer kompakten und einfach handhabbaren Vorrichtung integraler Bestandteil des Detektors sein. Sowohl eine derartige Erkennungseinrichtung als auch eine Bestimmungseinrichtung können auf einfache Weise durch jeweils eine Recheneinheit oder in einer gemeinsamen Recheneinheit realisiert werden, wobei eine derartige Recheneinheit beispielsweise ein PC oder sonstiger Computer sein kann.

Zur Gewährleistung einer sicheren Funktionalität des Verfahrens oder der Vorrichtung mit hoher Genauigkeit der Bestimmung der relativen Position können die Größe des Lesefensters, die Anordnung oder eine Anordnungsdichte der Detektionselemente auf oder in dem Objekt und der Abstand des Lesefensters oder des Detektors von dem Objekt derart aufeinander abgestimmt sein, dass mehrere Detektionselemente gleichzeitig erkennbar sind. Je mehr Detektionselemente gleichzeitig wahrgenommen und erkannt werden können, desto höher ist die Genauigkeit der Bestimmung der relativen Position.

Bei einer konkreten Ausführungsform des Verfahrens kann die Bestimmung der relativen Position zwischen dem Objekt und dem Detektor hinsichtlich einer relativen Verschiebung zwischen dem Objekt und dem Detektor in einer X-Richtung und/oder Y-Richtung erfolgen. Eine derartige Ausführung liegt beispielsweise vor, wenn sich der Detektor in einer Ebene bewegt, die parallel zu einer ebenen Oberfläche eines Objekts verläuft. In diesem Fall bleibt ein Abstand zwischen dem Detektor und der ebenen Oberfläche des Objekts in beispielsweise einer Z-Richtung im Wesentlichen konstant.

Alternativ oder zusätzlich zur obigen Verschiebung kann die Bestimmung der relativen Position zwischen dem Objekt und dem Detektor hinsichtlich eines Abstands zwischen dem Objekt und dem Detektor, vorzugsweise in einer Z-Richtung, erfolgen.

Weiter alternativ oder zusätzlich zur obigen Verschiebung und/oder Abstandsbestimmung kann die Bestimmung der relativen Position zwischen dem Objekt und dem Detektor hinsichtlich einer relativen Drehung zwischen dem Objekt und dem Detektor um eine Drehachse, vorzugsweise eine Z-Achse, erfolgen. Eine derartige Drehwinkelbestimmung kann der Überprüfung dienen, ob eine relative Drehung zwischen dem Detektor und dem Objekt stattfindet oder stattgefunden hat.

Im Hinblick auf eine einfache Realisierung einer Drehwinkelbestimmung können oder kann eine Geometrie einer für ein Wahrnehmen der Detektionselemente durch den Detektor erforderlichen beleuchteten Fläche des Objekts und/oder eine flächige Geometrie des Lesefensters und/oder eine flächige Geometrie eines vor dem Detektor angeordneten Ausblendeelements zur Ausblendung eines vorgebbaren Teils des vom Objekt in Richtung Lesefenster des Detektors gelangenden Lichts und/oder eine elektronische Maskierung des Lesefensters derart realisiert werden, dass eine Bestimmung der relativen Position zwischen dem Objekt und dem Detektor hinsichtlich einer relativen Drehung zwischen dem Objekt und dem Detektor um eine Drehachse, vorzugsweise eine Z-Achse, ermöglicht wird. Durch die spezifische Realisierung oder Gestaltung der Geometrie der beleuchteten Fläche des Objekts oder der Geometrie des Lesefensters oder der Geometrie des Ausblendeelements wird bei bekannter Anordnung und/oder Anordnungsdichte der Detektionselemente auf oder in dem Objekt beeinflusst, welche Detektionselemente in Abhängigkeit von ihrer Anordnung und/oder Anordnungsdichte wahrgenommen und erkannt werden können. Beispielsweise kann die Geometrie der beleuchteten Fläche oder des Lesefensters eine L-Form aufweisen, wobei Detektionselemente wahrgenommen werden können, die beispielsweise in diesem beleuchteten "L" oder zur Wahrnehmung durch das L-förmige Lesefenster angeordnet sind. Diese wahrgenommenen Detektionselemente sind in diesem Fall letztlich auch in einer mehr oder weniger L-Form angeordnet. Bei einer Drehung eines derartigen "L" durch Drehung der Beleuchtung oder des Lesefensters kann festgestellt werden, welche Detektionselemente noch erkannt werden und welche nicht. Insoweit kann eine Aussage über den aktuell vorliegenden Drehwinkel zwischen Objekt und Detektor und damit über die relative Position zwischen Objekt und Detektor gemacht werden.

Äquivalent vorteilhaft zu der Gestaltung der Geometrie des Lesefensters oder zu der Gestaltung der Geometrie der beleuchteten Fläche ist alternativ das vor dem Detektor angeordnete Ausblendeelement, das einen vorgebbaren Teil des vom Objekt in Richtung Lesefenster des Detektors gelangenden Lichts ausblendet oder anders ausgedrückt, nur einen vorgebbaren Teil des Lichts zum Lesefenster durchlässt. Die flächige Geometrie des Ausblendeelements wo kann dabei so gestaltet werden, dass letztendlich beispielsweise eine L-förmige Beleuchtung des Lesefensters erfolgt. Auch hierdurch wird - entsprechend den Erläuterungen im voranstehenden Absatz - eine Bestimmung der relativen Drehung zwischen dem Objekt und dem Detektor um eine Drehachse, vorzugsweise eine Z-Achse, ermöglicht. Das Ausblendeelement kann beispielsweise als LCD ausgebildet vor dem Detektor angeordnet sein.

Des Weiteren kann die Wirkung eines solchen Ausblendeelements in äquivalenter Weise durch einen geeignet gestalteten Auswertevorgang erfolgen, wobei mithilfe einer geeigneten Logik im Detektor oder in einer geeigneten Auswerteeinrichtung eine der Wirkung des Ausblendeelements vergleichbare elektronische oder verarbeitungstechnische Maskierung des Lesefensters erfolgt. Dieser Auswertevorgang entspricht in gleicher Weise der oben beschriebenen Gestaltung der Geometrie des Lesefensters. Beispielsweise könnte die Maskierung derart erfolgen, dass nur noch eine L-förmige Fläche des Detektors oder der Detektorelemente des Detektors bei der Wahrnehmung und Erkennung von Detektionselementen herangezogen werden. Die Maskierung erfolgt somit im Auslesepfad.

Ganz allgemein kann zur Bereitstellung einer einfachen Bestimmung der relativen Position zwischen dem Objekt und dem Detektor hinsichtlich einer relativen Drehung, d.h. hinsichtlich einer Drehwinkelposition oder Drehposition, die Geometrie der beleuchteten Fläche derart realisiert werden, dass diese bei einer Drehung um jede beliebig gewählte Normale auf der beleuchteten Fläche nur bei einer Drehung um 360° wieder zur Deckung gelangt. Dies bedeutet, dass die beleuchtete Fläche derart asymmetrisch ist, dass jede Drehwinkelposition der Fläche um eine beliebige auf der Fläche errichteten Normalen einzigartig und damit in ihrer Aussagekraft spezifisch ist. Erst bei einer Drehung um 360° kommt die Fläche wieder zur Deckung auf sich selbst. Das wäre beispielsweise bei einem Rechteck, das um eine auf seinem Mittelpunkt errichteten Normalen gedreht wird, auch bei einer Drehung um 180° der Fall. Bezüglich einer solchen Drehung eines Rechtecks existieren also bei einer um 360° erfolgenden Drehung zwei Drehwinkelpositionen, die nicht voneinander unterscheidbar sind. Diesbezüglich sei angemerkt, dass bei der oberen Betrachtung von Bedeutung ist, dass die Normale auf der Fläche und nicht neben der Fläche errichtet wird. Bei einer Errichtung neben der Fläche wird eine vollständige Deckung immer erst nach einer Drehung um 360° wieder erreicht.

In analoger Weise wie die Geometrie der beleuchteten Fläche kann alternativ und ganz allgemein zur Bereitstellung einer einfachen Bestimmung der relativen Position zwischen dem Objekt und dem Detektor hinsichtlich einer relativen Drehung die flächige Geometrie des Lesefensters oder die flächige Geometrie des Ausblendeelements oder der elektronischen Maskierung derart realisiert werden, dass diese bei einer Drehung um jede beliebig gewählte Normale auf der flächigen Geometrie des Lesefensters oder der flächigen Geometrie des Ausblendeelements oder der elektronischen Maskierung nur bei einer Drehung um 360° wieder zur Deckung gelangt. Insoweit wird zur Vermeidung von Wiederholungen und hinsichtlich der Beschreibung und der Vorteile dieser Realisierung der flächigen Geometrie des Lesefensters oder der flächigen Geometrie des Ausblendeelements oder der elektronischen Maskierung auf den letzten Absatz verwiesen.

Ebenfalls zur Bereitstellung einer einfachen Bestimmung der relativen Position zwischen dem Objekt und dem Detektor hinsichtlich einer relativen Drehung können die Geometrie der beleuchteten Fläche und/oder die flächige Geometrie des Lesefensters oder die flächige Geometrie des Ausblendeelements oder der elektronischen Maskierung nicht punktsymmetrisch oder nicht achsensymmetrisch oder nicht verschiebungsinvariant sein. Dabei ist ebenfalls von Vorteil, dass bei jedem Drehwinkel einer um eine Normale gedrehten Fläche jeweils eine spezifische Drehwinkelposition erzeugt wird, wobei die Normale auch bei diesem Ausführungsbeispiel auf der jeweiligen Fläche zu errichten ist. Eine Deckung der jeweiligen Flächen erfolgt auch bei diesem Ausführungsbeispiel erst bei einer vollständigen Drehung um 360°.

Im Hinblick auf eine besonders sichere Bestimmung der relativen Position kann eine für ein Wahrnehmen der Detektionselemente durch den Detektor erforderliche beleuchtete Fläche des Objekts gleichzeitig mit unterschiedlichen Wellenlängen beleuchtet werden. Weiterhin kann durch geeignete Wahl der Wellenlänge ein Störabstand zu einfallendem Fremdlicht erhöht werden. Beispielsweise kann eine grüne Beleuchtung gewählt werden, wenn rotes Fremdlicht zu befürchten ist.

Bei einer weiteren Ausführungsform können mindestens zwei Bereiche einer für ein Wahrnehmen der Detektionselemente durch den Detektor erforderlichen beleuchteten Fläche des Objekts gleichzeitig mit jeweils unterschiedlichen Wellenlängen beleuchtet werden. Hierdurch können Bereiche mit unterschiedlichen Geometrie erzeugt werden. Beispielsweise kann auf diese Weise ein L-förmiger Bereich zur Bestimmung der Winkelposition beleuchtungstechnisch realisiert werden. Somit können eine genaue Positionsbestimmung und eine Bestimmung des Winkels gleichzeitig erfolgen.

Bei einer konkreten Ausführungsform können die Detektionselemente auf einer Oberseite des Objekts angeordnet oder ausgebildet sein. In weiter konkreter Weise können die Detektionselemente auf das Objekt aufgedruckt sein.

In besonders vorteilhafter Weise können die Detektionselemente Codes, insbesondere Data Matrix Codes, QR-Codes oder Barcodes, sein. Die Anordnung derartiger Codes kann entlang einem Band erfolgen, vorzugsweise in mehreren nebeneinander oder übereinander angeordneten Reihen, um eine möglichst hohe Informationsdichte pro Fläche des Objekts oder Bandfläche zu erreichen. Hierdurch kann ein sogenanntes Codeband realisiert werden.

Bei einer weiteren vorteilhaften Ausführungsform der Erfindung kann eine Anordnung von Detektionselementen verwendet werden, bei denen einerseits Detektionselemente für eine übliche Positionsbestimmung, beispielsweise entlang einem Codeband angeordnete Detektionselemente, und andererseits weitere Detektionselemente angeordnet sind, die ausschließlich für eine Feinpositionierung hinsichtlich einer wie oben erläuterten Verschiebung und/oder hinsichtlich einer wie oben erläuterten Drehung um eine Drehachse angeordnet sind. Dabei findet quasi eine Trennung der üblichen Positionsbestimmung und der Feinpositionierung mittels unterschiedlicher Detektionselemente statt.

Hierzu können beispielsweise weitere Detektionselemente oder Codes einem üblichen Codeband überlagert werden. Die weiteren Detektionselemente können getrennt vom Codeband dekodiert werden.

Dabei können weiterhin die weiteren Detektionselemente nur unter vorgegebenen besonderen Bedingungen und nicht bei den üblichen Betriebsbedingungen sichtbar sein. Dies könnte beispielsweise mit Detektionselementen realisiert werden, die beispielsweise mit UV-Tinte realisiert sind. Alternativ hierzu kann über eine gewählte Beleuchtungsfarbe oder Beleuchtungswellenlänge in Zusammenwirkung mit einer gewählten Farbe oder Remissionswellenlänge der weiteren Detektionselemente eine Sichtbarkeit der weiteren Detektionselemente realisiert oder verhindert werden. In gleicher beleuchtungstechnischer Weise kann die Sichtbarkeit der üblichen Detektionselemente hervorgerufen oder verhindert werden.

Im Hinblick auf die Bestimmung einer relativen Drehung kann eine wie oben beschriebene geeignete Geometrie einer für ein Wahrnehmen der Detektionselemente durch den Detektor erforderlichen beleuchteten Fläche des Objekts und/oder eine geeignete flächige Geometrie des Lesefensters und/oder eine geeignete flächige Geometrie eines vor dem Detektor angeordneten Ausblendeelements und/oder eine geeignete elektronische Maskierung des Lesefensters in Zusammenwirkung mit den weiteren Detektionselementen realisiert werden. Beispielsweise kann die geeignete Geometrie in allen zuvor genannten Fällen eine T-förmige Geometrie sein, um den Bereich quer zu einem Codeband besser ausnutzen zu können.

Im Konkreten kann beispielsweise ein übliches Detektionselement als zweifarbiger Code - rot und blau - und ein weiteres, vorzugsweise größeres Detektionselement als grüner Code realisiert werden. Dabei kann entweder mit roter oder blauer Beleuchtung vorzugsweise vollflächig beleuchtet werden, um die grünen Codes sichtbar zu machen. Zusätzlich kann in einem Muster - beispielsweise ein L - ein Bereich grün ausgeleuchtet werden. Als Imager kann beispielsweise ein RGB-Chip verwendet werden. Die roten und blauen Pixel können in üblicher Weise zu einem Decoder weitergegeben werden, um die übliche sichere Position zu bestimmen. Die zusätzlichen grünen Pixel können zu einem anderen Decoder weitergegeben werden, um für eine Feinpositionierung in der oben beschriebenen Weise verwendet zu werden. Alternativ zur gewählten Musterform der grünen Beleuchtung kann auch eine flächige grüne Beleuchtung zusammen mit einem Farbfilter eingesetzt werden, der grünes Licht außerhalb einer definierten Form - beispielsweise ein L - blockt und direkt vor dem Imager angeordnet ist.

Als Detektor kann eine monochrome Kamera, vorzugsweise eine Kamera mit einem Pixelsensor, verwendet werden, wobei weiter vorzugsweise der Pixelsensor als CMOS-Sensor oder CCD-Sensor oder als Zeilensensor ausgebildet sein kann. Es sind jedoch auch andere Detektortypen verwendbar.

In weiter vorteilhafter Weise kann das Verfahren in Verbindung mit einer sicheren Positionsbestimmung realisiert werden, wobei eine Kombination des Verfahrens mit einer sicheren Positionsbestimmung gemäß dem einleitend beschriebenen Verfahren zur sicheren Positionserkennung gemäß der WO 2017/045704 A1 erfolgen kann. Dabei kann eine überlagerte Steuerungseinheit eine Beleuchtungsfarbe vorzugsweise pseudozufällig wechseln, um bei einem Stillstand der Bewegung zwischen dem Objekt und dem Detektor beispielsweise ein Einfrieren des Detektorbilds oder Kamerabilds zu erkennen.

Mit dem erfindungsgemäßen Verfahren und der erfindungsgemäßen Vorrichtung wird eine Verbesserung der Positionsauflösung erreicht, wobei darüber hinaus eine Bestimmung des Winkels zwischen Objekt und Detektor ermöglicht ist. Bei entsprechenden beispielhaften Ausführungen kann dies eine Bestimmung des Winkels zwischen jeweils als Code ausgebildeten Detektionselementen und einem Lesefenster des Detektors bedeuten.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in zwei Darstellungen jeweils einen Ausschnitt eines als Codeband ausgebildeten Objekts mit einem bzw. mehreren schematisch darüber eingeblendeten Lesefenstern zur Veranschaulichung eines Ausführungsbeispiels des erfindungsgemäßen Verfahrens,
- Fig. 2: einen Ausschnitt eines als Codeband ausgebildeten Objekts mit einem schematisch darüber eingeblendeten Lesefenster und einer teilweisen Beleuchtung des Objekts gemäß einem weiteren Ausführungsbeispiel des erfindungsgemäßen Verfahrens,
- Fig. 3: den Ausschnitt aus Fig. 2 mit zwei unterschiedlichen gegeneinander verdrehten Beleuchtungssituationen I und II,
- Fig. 4: in zwei Darstellungen jeweils den Ausschnitt aus Fig. 2, wobei in der rechten Hälfte der Fig. 2 die Beleuchtungssituation I aus Fig. 3 gezeigt ist,
- Fig. 5: in zwei Darstellungen jeweils einen Ausschnitt eines als Codeband ausgebildeten Objekts mit unterschiedlich beleuchteten Bereichen gemäß einem weiteren Ausführungsbeispiel des erfindungsgemäßen Verfahrens,
- Fig. 6: in zwei Darstellungen jeweils einen Ausschnitt eines als Codeband ausgebildeten Objekts mit unterschiedlich beleuchteten Bereichen gemäß einem weiteren Ausführungsbeispiel des erfindungsgemäßen Verfahrens,

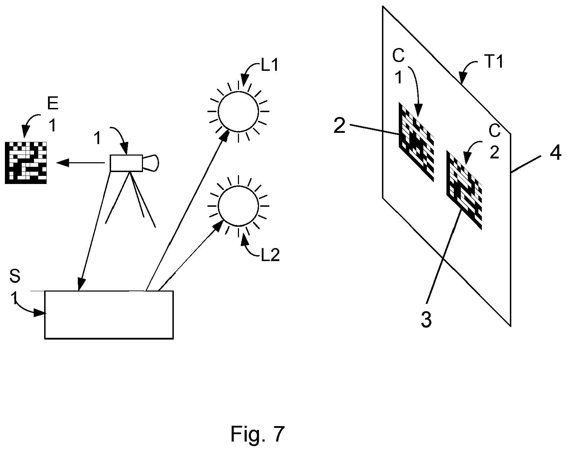

- Fig. 7: in einer schematischen Darstellung einen bekannten Aufbau zur sicheren Positionsbestimmung,
- Fig. 8: ein Blockdiagramm zu dem bekannten Aufbau zu Erläuterung des bekannten Verfahrens zur sicheren Positionsbestimmung,
- Fig. 9: einen Ausschnitt eines als Codeband ausgebildeten Objekts mit einem schematisch eingeblendeten Lesefenster und dem Erkennen eines einzelnen Codes und
- Fig. 10: in einer schematischen Darstellung den Ausschnitt aus Fig. 9 mit mehreren schematisch eingeblendeten Lesefenstern.

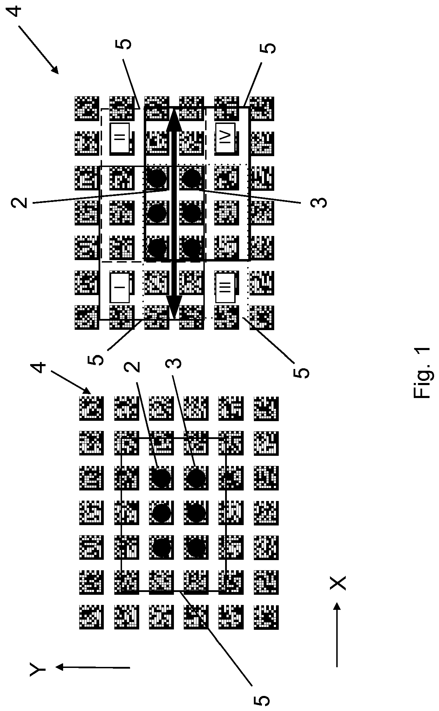

Fig. 1 zeigt in zwei Darstellungen jeweils einen Ausschnitt eines als Codeband ausgebildeten und Detektionselemente 2, 3 in Form von Data Matrix Codes aufweisenden Objekts 4 mit einem - linke Darstellung - bzw. mehreren - rechte Darstellung - schematisch darüber eingeblendeten Lesefenstern 5 zur Veranschaulichung eines Ausführungsbeispiels des erfindungsgemäßen Verfahrens. In der linken Hälfte der Fig. 1 können in dem Lesefenster 5 sechs Codes sowohl wahrgenommen als auch erkannt werden. Diese Codes sind durch gefüllte Kreise gekennzeichnet.

Die Bestimmung der relativen Position zwischen dem Objekt 4 und einem Detektor erfolgt in besonders genauer Weise erst bei einem Erkennen mehrerer - mindestens zwei - durch das Lesefenster 5 gleichzeitig wahrgenommener Codes. Je mehr Codes pro Flächeneinheit auf dem Codeband abgebildet sind und je mehr Codes im Lesefenster 5 dekodiert und damit erkannt werden können, desto höher ist die sichere Positioniergenauigkeit. Dies bedeutet jedoch einen entsprechend zunehmenden zeitlichen Aufwand bei der Dekodierung und Verifikation der Codes.

In der rechten Hälfte der Fig. 1 - rechte Darstellung - ist das Lesefenster 5 in vier verschiedenen Positionen I, II, III und IV eingeblendet, wobei das Lesefenster 5 wie in der linken Darstellung der Fig. 1 jeweils alle sechs Codes abdeckt und somit eine Erkennung dieser sechs Codes ermöglicht. Das bedeutet, dass die Genauigkeit der Positionsbestimmung gemäß der Situation in Fig. 1 gegenüber der in den Fig. 9 und 10 dargestellten herkömmlichen Situation mit einer wesentlich geringeren Unsicherheit verbunden und somit eine deutlich verbesserte Positioniergenauigkeit realisiert ist. Durch die sichere Erkennung mehrerer Codes im Lesefenster 5 wird die Auflösung der Positionsbestimmung signifikant verbessert.

Die Bestimmung der relativen Position zwischen dem Objekt 4 und dem Detektor kann nicht nur hinsichtlich einer relativen Verschiebung zwischen dem Objekt 4 und dem Detektor in einer X-Richtung und/oder Y-Richtung erfolgen. Bei geschickter Wahl der Geometrie des Lesefensters 5 und/oder der Beleuchtung des Objekts 4 kann auch eine Bestimmung der relativen Position zwischen dem Objekt 4 und dem Detektor hinsichtlich einer relativen Drehung zwischen dem Objekt 4 und dem Detektor um eine Z-Achse oder Drehachse erfolgen.

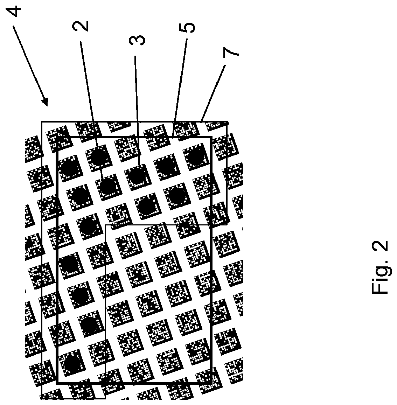

Hierzu zeigt Fig. 2 ein Ausführungsbeispiel mit einer lokal eingeschränkten Beleuchtung in einem Bereich 7 zur sicheren Erkennung und Bestimmung eines Winkels bzw. einer relativen Drehung zwischen dem Objekt 4 und dem Detektor. Das Lesefenster 5 weist dabei wie in den obigen Ausführungsbeispielen eine rechteckige Form auf. Genauer gesagt weist die lokal eingeschränkte Beleuchtung bzw. der beleuchtete Bereich 7 in etwa eine L-Form auf. Wenn, wie in Fig. 2 gezeigt, eine Beleuchtungseinheit nur einen Teil des Codebands beleuchtet, dann kann der Detektor in diesem Fall nur die durch einen ausgefüllten Kreis gekennzeichneten und als Codes ausgebildeten vierzehn Detektionselemente 2, 3 erkennen.

Da der Bereich 7 der beleuchteten Fläche mit seiner darin enthaltenen Codeanordnung bekannt ist, kann der Winkel bzw. die relative Drehung in einem gewissen Umfang sicher ermittelt werden, vorausgesetzt, dass alle Codes in dem vom Lesefenster 5 abgedeckten Teil des Bereichs 7 erkannt werden. Zusätzlich kann auch die Position hinsichtlich einer relativen Verschiebung in X-Richtung und/oder Y-Richtung mit hoher Genauigkeit sicher ermittelt werden. Hierzu ist zu prüfen, in welchem Umfang es möglich ist, den Bereich 7 bei nach wie vor sicherem gleichzeitigem Erkennen aller vierzehn Codes zu positionieren.

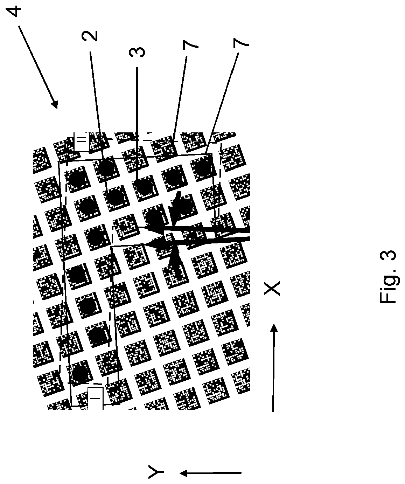

Fig. 3 zeigt einen solchen Variationsbereich anhand von zwei unterschiedlichen Positionen I und II des Bereichs 7, wobei der Bereich 7 gedreht und verschoben ist. Die in Fig. 3 dargestellten Pfeile geben den Variationsbereich des Winkels an. Somit ist der Variationsbereich der Geometrie der Beleuchtung für die sichere Bestimmung des Winkels und der Verschiebung in X-Richtung und/oder Y-Richtung gezeigt.

Dabei ist bei der Wahl der Geometrie der beleuchteten Fläche oder der Geometrie des Lesefensters 5 darauf zu achten, dass diese bei einer Drehung um jede beliebig gewählte Normale auf der beleuchteten Fläche nur bei einer Drehung um 360° wieder zur Deckung gelangt.

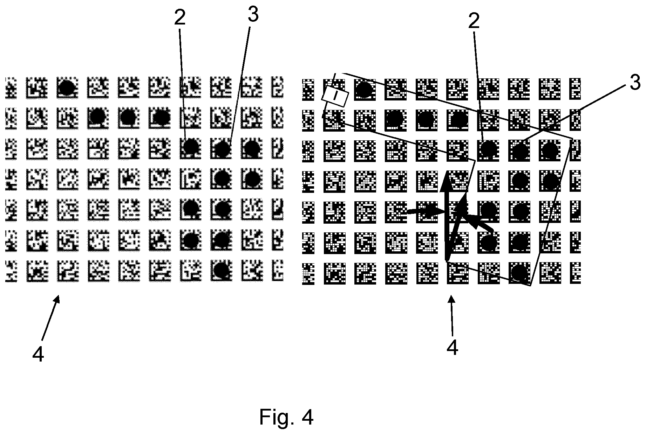

Fig. 4 zeigt in zwei Darstellungen jeweils den Ausschnitt aus Fig. 2, wobei in der rechten Hälfte der Fig. 2 die Beleuchtungssituation I aus Fig. 3 gezeigt ist. Die linke Darstellung zeigt die sicher erkannten Codes oder Detektionselemente 2, 3 des Objekts 4. Bei bekannter Beleuchtungsgeometrie wird diese so lange über die erkannten Codes verschoben und gedreht, bis alle erkannten Codes in die Geometrie passen, wie dies in der rechten Darstellung gezeigt ist.

Bei einem weiteren Ausführungsbeispiel wird das Lesefenster 5 gleichzeitig mit zwei unterschiedlichen Farben beleuchtet. Dabei ergibt sich eine genauso hohe Genauigkeit bei der Positionsbestimmung wie bei den vorherigen Ausführungsbeispielen. Allerdings kann die Sicherheit der Positionsbestimmung erhöht werden, da im Lesefenster 5 zentral Codes für die Wahrnehmung und Erkennung genutzt werden können. Des Weiteren kann bei dieser Variante das Verfahren der alternierenden Beleuchtung eingesetzt werden, um eine Erkennung und hohe Sicherheit auch bei einem Stillstand der relativen Bewegung zwischen dem Objekt 4 und dem Detektor zu realisieren. Bei einem vorgegebenen Wechsel der Beleuchtung muss und wird sich auch hier der Codeinhalt ändern und/oder werden unterschiedliche Codes erkannt. Darüber hinaus kann ein Störabstand zu einem Fremdlicht erhöht werden. Beispielsweise kann eine grüne Beleuchtung gewählt werden, wenn ein rotes Fremdlicht zu befürchten ist.

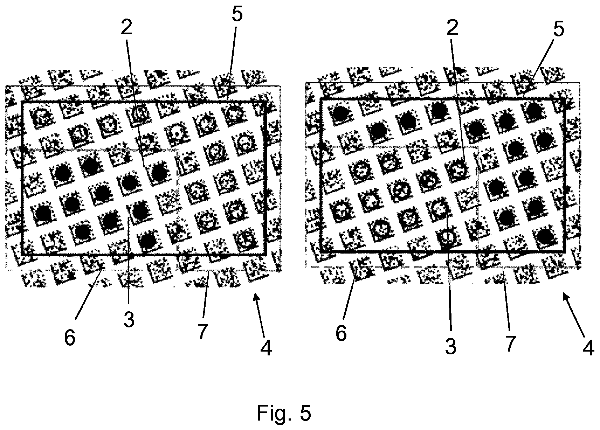

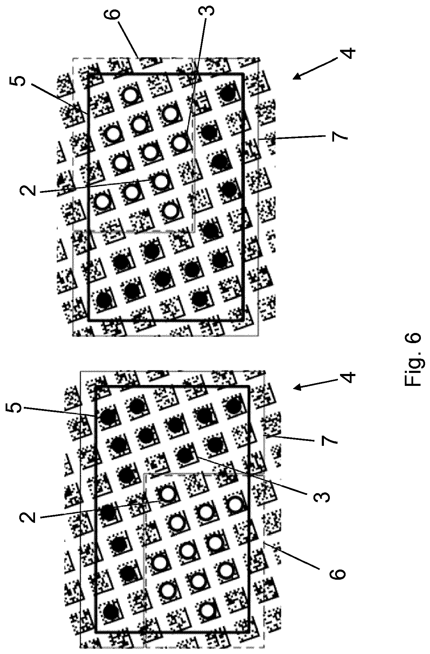

In den Fig. 5 und 6 sind unterschiedliche Szenarien gezeigt, wobei in Fig. 5 eine gleichzeitige Beleuchtung unterschiedlicher Bereiche 6 und 7 mit verschiedenen Farben - hier beispielsweise grün und rot - zur sicheren Bestimmung des Winkels und der Position in X-Richtung und/oder Y-Richtung realisiert wird. Dabei ist in der linken Hälfte der Fig. 5 der rechteckige Bereich 6 grün und der L-förmige Bereich 7 rot beleuchtet. In der rechten Hälfte der Fig. 5 ist in umgekehrter Weise der Bereich 6 rot und der Bereich 7 grün beleuchtet. Das Lesefenster 5 befindet sich über jeweils einem Teil der beleuchteten Bereiche 6 und 7. Das Lesefenster 5 kann jedoch auch im Wesentlichen so dimensioniert sein, dass die beleuchteten Bereiche 6 und 7 gleichzeitig vollständig abgedeckt sind.

Auch bei dem in Fig. 6 gezeigten Ausführungsbeispiel erfolgt eine gleichzeitige Beleuchtung unterschiedlicher Bereiche 6 und 7 mit beispielsweise rotem - Bereich 6 - und grünem - Bereich 7 - Licht. Dabei ist der Bereich 6 rechteckig und der Bereich 7 L-förmig ausgebildet. Gemäß diesem Ausführungsbeispiel erfolgt eine Variation der Bereiche 6 und 7 mit verschiedenen Farben zur ebenfalls genauen und sicheren Bestimmung des Winkels und der Position in X-Richtung und/oder Y-Richtung.

Die erkannten, als Codes ausgebildeten Detektionselemente 2 und 3 des jeweils als Codeband ausgebildeten Objekts 4 sind bei den Ausführungsbeispielen in den Fig. 5 und 6 ebenfalls durch Kreise markiert, wobei gefüllte Kreise rot und ungefüllte Kreise grün sind.

Hinsichtlich weiterer vorteilhafter Ausgestaltungen des erfindungsgemäßen Verfahrens und der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf diese Ausführungsbeispiele einschränken.

### Bezugszeichenliste

- 1: Detektor
- 2: Detektionselement
- 3: Detektionselement
- 4: Objekt
- 5: Lesefenster
- 6: Bereich
- 7: Bereich

- C1: Code
- C2: Code
- E1: Code
- L1: Lampe
- L2: Lampe
- S1: Steuerungseinheit
- T1: Träger

## Patentansprüche

1. Verfahren zur Bestimmung der relativen Position zwischen einem Objekt (4) und einem Detektor (1), wobei eine Relativbewegung zwischen dem Objekt (4) und dem Detektor (1) in einer Bewegungsrichtung erfolgen kann,
wobei das Objekt (4) mehrere unterschiedliche Detektionselemente (2, 3) in einer definierten Anordnung relativ zueinander und relativ zu dem Objekt (4) aufweist, wobei der Detektor (1) ein Lesefenster (5) zum Wahrnehmen von Detektionselementen (2, 3) aufweist und
wobei eine Bestimmung der relativen Position zwischen dem Objekt (4) und dem Detektor (1) bei einem Erkennen eines wahrgenommenen Detektionselements (2, 3) - unter Berücksichtigung der bekannten definierten Anordnung der Detektionselemente (2, 3) relativ zueinander und relativ zu dem Objekt (4) - mittels des Detektors (1) oder mittels einer mit dem Detektor (1) zusammenwirkenden Bestimmungseinrichtung erfolgt, wobei die Bestimmung der relativen Position zwischen dem Objekt (4) und dem Detektor (1) erst bei einem Erkennen mehrerer durch das Lesefenster (5) gleichzeitig wahrgenommener Detektionselemente (2, 3) erfolgt,
**dadurch gekennzeichnet, dass** eine flächige Geometrie des Lesefensters (5) und/oder eine flächige Geometrie eines vor dem Detektor (1) angeordneten Ausblendeelements zur Ausblendung eines vorgebbaren Teils des vom Objekt (4) in Richtung Lesefenster (5) des Detektors (1) gelangenden Lichts derart realisiert werden oder wird, dass eine Bestimmung der relativen Position zwischen dem Objekt (4) und dem Detektor (1) hinsichtlich einer relativen Drehung zwischen dem Objekt (4) und dem Detektor (1) um eine Drehachse ermöglicht wird.

2. Verfahren nach Anspruch 1, **dadurch gekennzeichnet, dass** ein Erkennen eines oder mehrerer durch das Lesefenster (5) wahrgenommener Detektionselemente (2, 3) mittels des Detektors (1) oder mittels einer mit dem Detektor (1) zusammenwirkenden Erkennungseinrichtung erfolgt.

3. Verfahren nach Anspruch 1 oder 2, **dadurch gekennzeichnet, dass** die Größe des Lesefensters (5), die Anordnung oder eine Anordnungsdichte der Detektionselemente (2, 3) auf oder in dem Objekt (4) und der Abstand des Lesefensters (5) oder des Detektors (1) von dem Objekt (4) derart aufeinander abgestimmt sind, dass mehrere Detektionselemente (2, 3) gleichzeitig erkennbar sind.

4. Verfahren nach einem der Ansprüche 1 bis 3, **dadurch gekennzeichnet, dass** die Bestimmung der relativen Position zwischen dem Objekt (4) und dem Detektor (1) hinsichtlich einer relativen Verschiebung zwischen dem Objekt (4) und dem Detektor (1) in einer X-Richtung und/oder Y-Richtung erfolgt.

5. Verfahren nach einem der Ansprüche 1 bis 4, **dadurch gekennzeichnet, dass** die Bestimmung der relativen Position zwischen dem Objekt (4) und dem Detektor (1) hinsichtlich eines Abstands zwischen dem Objekt (4) und dem Detektor (1), vorzugsweise in einer Z-Richtung, erfolgt.

6. Verfahren nach einem der Ansprüche 1 bis 5, **dadurch gekennzeichnet, dass** die Bestimmung der relativen Position zwischen dem Objekt (4) und dem Detektor (1) hinsichtlich einer relativen Drehung zwischen dem Objekt (4) und dem Detektor (1) um eine Drehachse, vorzugsweise eine Z-Achse, erfolgt.

7. Verfahren nach einem der Ansprüche 1 bis 6, **dadurch gekennzeichnet, dass** eine Geometrie einer für ein Wahrnehmen der Detektionselemente (2, 3) durch den Detektor (1) erforderlichen beleuchteten Fläche des Objekts (4) und/oder eine elektronische Maskierung des Lesefensters (5) derart realisiert werden oder wird, dass eine Bestimmung der relativen Position zwischen dem Objekt (4) und dem Detektor (1) hinsichtlich einer relativen Drehung zwischen dem Objekt (4) und dem Detektor (1) um eine Drehachse ermöglicht wird.

8. Verfahren nach Anspruch 7, **dadurch gekennzeichnet, dass** die Geometrie der beleuchteten Fläche derart realisiert wird, dass diese bei einer Drehung um jede beliebig gewählte Normale auf der beleuchteten Fläche nur bei einer Drehung um 360° wieder zur Deckung gelangt.

9. Verfahren nach einem der Ansprüche 1 bis 8, **dadurch gekennzeichnet, dass** die flächige Geometrie des Lesefensters (5) derart realisiert wird, dass diese bei einer Drehung um jede beliebig gewählte Normale auf der flächigen Geometrie des Lesefensters (5) nur bei einer Drehung um 360° wieder zur Deckung gelangt.

10. Verfahren nach einem der Ansprüche 1 bis 9, **dadurch gekennzeichnet, dass** die Geometrie des Ausblendeelements derart realisiert wird, dass diese bei einer Drehung um jede beliebig gewählte Normale auf der flächigen Geometrie des Ausblendeelements nur bei einer Drehung um 360° wieder zur Deckung gelangt.

11. Verfahren nach einem der Ansprüche 1 bis 10 bzw. 7 bis 10, **dadurch gekennzeichnet, dass** die Geometrie der beleuchteten Fläche und/oder die flächige Geometrie des Lesefensters (5) und/oder die Geometrie des Ausblendeelements und/oder die Geometrie der elektronischen Maskierung nicht punktsymmetrisch oder nicht achsensymmetrisch oder nicht verschiebungsinvariant sind oder ist.

12. Verfahren nach einem der Ansprüche 1 bis 11, **dadurch gekennzeichnet, dass** eine für ein Wahrnehmen der Detektionselemente (2, 3) durch den Detektor (1) erforderliche beleuchtete Fläche des Objekts (4) gleichzeitig mit unterschiedlichen Wellenlängen beleuchtet wird.

13. Verfahren nach einem der Ansprüche 1 bis 12, **dadurch gekennzeichnet, dass** mindestens zwei Bereiche (6, 7) einer für ein Wahrnehmen der Detektionselemente (2, 3) durch den Detektor (1) erforderlichen beleuchteten Fläche des Objekts (4) gleichzeitig mit jeweils unterschiedlichen Wellenlängen beleuchtet werden.

14. Verfahren nach einem der Ansprüche 1 bis 13, **dadurch gekennzeichnet, dass** die Detektionselemente (2, 3) auf einer Oberseite des Objekts (4) angeordnet oder ausgebildet sind und/oder
dass die Detektionselemente (2, 3) Codes, insbesondere Data Matrix Codes, QR-Codes oder Barcodes, sind und/oder
dass das Verfahren in Verbindung mit einer sicheren Positionsbestimmung realisiert wird.

15. Vorrichtung zur Durchführung eines Verfahrens zur Bestimmung der relativen Position zwischen einem Objekt (4) und einem Detektor (1), vorzugsweise zur Durchführung des Verfahrens nach einem der Ansprüche 1 bis 14, wobei eine Relativbewegung zwischen dem Objekt (4) und dem Detektor (1) in einer Bewegungsrichtung erfolgen kann,
wobei das Objekt (4) mehrere unterschiedliche Detektionselemente (2, 3) in einer definierten Anordnung relativ zueinander und relativ zu dem Objekt (4) aufweist, wobei der Detektor (1) ein Lesefenster (5) zum Wahrnehmen von Detektionselementen (2, 3) aufweist und
wobei eine Bestimmung der relativen Position zwischen dem Objekt (4) und dem Detektor (1) bei einem Erkennen eines wahrgenommenen Detektionselements (2, 3) - unter Berücksichtigung der bekannten definierten Anordnung der Detektionselemente (2, 3) relativ zueinander und relativ zu dem Objekt (4) - mittels des Detektors (1) oder mittels einer mit dem Detektor (1) zusammenwirkenden Bestimmungseinrichtung durchführbar ist, wobei die Bestimmungseinrichtung zur Bestimmung der relativen Position zwischen dem Objekt (4) und dem Detektor (1) erst bei einem Erkennen mehrerer durch das Lesefenster (5) gleichzeitig wahrgenommener Detektionselemente (2, 3) ausgebildet ist,
**dadurch gekennzeichnet, dass** eine flächige Geometrie des Lesefensters (5) und/oder eine flächige Geometrie eines vor dem Detektor (1) angeordneten Ausblendeelements zur Ausblendung eines vorgebbaren Teils des vom Objekt (4) in Richtung Lesefenster (5) des Detektors (1) gelangenden Lichts derart realisiert sind oder ist, dass eine Bestimmung der relativen Position zwischen dem Objekt (4) und dem Detektor (1) hinsichtlich einer relativen Drehung zwischen dem Objekt (4) und dem Detektor (1) um eine Drehachse ermöglicht wird.

## Claims

1. Method for determining the relative position between an object (4) and a detector (1), wherein a relative movement between the object (4) and the detector (1) can be carried out in a movement direction,
wherein the object (4) has a plurality of different detection elements (2, 3) in a defined arrangement relative to each other and relative to the object (4),
wherein the detector (1) has a reading window (5) for perceiving detection elements (2, 3) and
wherein a determination of the relative position between the object (4) and the detector (1) is carried out when a perceived detection element (2, 3) has been identified - taking into account the known defined arrangement of the detection elements (2, 3) relative to each other and relative to the object (4) - by means of the detector (1) or by means of a determination device which cooperates with the detector (1), wherein the determination of the relative position between the object (4) and the detector (1) is carried out only when a plurality of detection elements (2, 3) which have been perceived by the reading window (5) at the same time have been identified,
**characterised in that** a planar geometry of the reading window (5) and/or a planar geometry of a fading element which is arranged in front of the detector (1) for fading out a predeterminable portion of the light which arrives from the object (4) in the direction of the reading window (5) of the detector (1) is/are produced in such a manner that a determination of the relative position between the object (4) and the detector (1) with regard to a relative rotation between the object (4) and the detector (1) about a rotation axis is enabled.

2. Method according to claim 1, **characterised in that** an identification of one or more detection elements (2, 3) which have been perceived by the reading window (5) is carried out by means of the detector (1) or by means of an identification device which cooperates with the detector (1).

3. Method according to claim 1 or 2, **characterised in that** the size of the reading window (5), the arrangement or an arrangement density of the detection elements (2, 3) on or in the object (4) and the spacing of the reading window (5) or the detector (1) from the object (4) are adapted to each other so that a plurality of detection elements (2, 3) can be identified at the same time.

4. Method according to any one of claims 1 to 3,
**characterised in that** the determination of the relative position between the object (4) and the detector (1) with regard to a relative displacement between the object (4) and the detector (1) is carried out in an X direction and/or Y direction.

5. Method according to any one of claims 1 to 4,
**characterised in that** the determination of the relative position between the object (4) and the detector (1) with regard to a spacing between the object (4) and the detector (1) is preferably carried out in a Z direction.

6. Method according to any one of claims 1 to 5,
**characterised in that** the determination of the relative position between the object (4) and the detector (1) with regard to a relative rotation between the object (4) and the detector (1) is carried out about a rotation axis, preferably a Z axis.

7. Method according to any one of claims 1 to 6,
**characterised in that** a geometry of an illuminated face, which is required for the detector (1) to perceive the detection elements (2, 3), of the object (4) and/or an electronic masking of the reading window (5) is/are produced in such a manner that a determination of the relative position between the object (4) and the detector (1) with regard to a relative rotation between the object (4) and the detector (1) about a rotation axis is enabled.

8. Method according to claim 7, **characterised in that** the geometry of the illuminated face is produced in such a manner that, in the event of a rotation about any freely selected normal on the illuminated face, it moves into congruence again only with a rotation through 360°.

9. Method according to any one of claims 1 to 8,
**characterised in that** the planar geometry of the reading window (5) is produced in such a manner that, in the event of a rotation about any freely selected normal on the planar geometry of the reading window (5), it moves into congruence again only with a rotation through 360°.

10. Method according to any one of claims 1 to 9,
**characterised in that** the geometry of the fading element is produced in such a manner that, in the event of a rotation about any freely selected normal on the planar geometry of the fading element, it moves into congruence again only with a rotation through 360°.

11. Method according to any one of claims 1 to 10 or 7 to 10, **characterised in that** the geometry of the illuminated face and/or the planar geometry of the reading window (5) and/or the geometry of the fading element and/or the geometry of the electronic masking is/are not point-symmetrical or not axially symmetrical or not displacement invariant.

12. Method according to any one of claims 1 to 11,
**characterised in that** an illuminated face, which is required for the detector (1) to perceive the detection elements (2, 3), of the object (4) is illuminated at the same time with different wavelengths.

13. Method according to any one of claims 1 to 12,
**characterised in that** at least two regions (6, 7) of an illuminated face, which is required for the detector (1) to perceive the detection elements (2, 3), of the object (4) are illuminated at the same time with different wavelengths.

14. Method according to any one of claims 1 to 13,
**characterised in that** the detection elements (2, 3) are arranged and/or formed on an upper side of the object (4) and/or **in that** the detection elements (2, 3) are codes, in particular data matrix codes, QR codes or barcodes and/or in that the method is carried out in connection with a reliable position determination.

15. Apparatus for carrying out a method for determining the relative position between an object (4) and a detector (1), preferably for carrying out the method according to any one of claims 1 to 14, wherein a relative movement can be carried out between the object (4) and the detector (1) in a movement direction,
wherein the object (4) has a plurality of different detection elements (2, 3) in a defined arrangement relative to each other and relative to the object (4),
wherein the detector (1) has a reading window (5) for perceiving detection elements (2, 3), and
wherein a determination of the relative position between the object (4) and the detector (1) can be carried out when a perceived detection element (2, 3) has been identified - taking into account the known defined arrangement of the detection elements (2, 3) relative to each other and relative to the object (4) - by means of the detector (1) or by means of a determination device which cooperates with the detector (1), wherein the determination device is constructed to determine the relative position between the object (4) and the detector (1) only when a plurality of detection elements (2, 3) which have been perceived by the reading window (5) at the same time have been identified,
**characterised in that** a planar geometry of the reading window (5) and/or a planar geometry of a fading element which is arranged in front of the detector (1) for fading out a predeterminable portion of the light which arrives from the object (4) in the direction of the reading window (5) of the detector (1) is/are produced in such a manner that a determination of the relative position between the object (4) and the detector (1) with regard to a relative rotation between the object (4) and the detector (1) about a rotation axis is enabled.

## Revendications

1. Procédé de détermination de la position relative entre un objet (4) et un détecteur (1), dans lequel un déplacement relatif entre l'objet (4) et le détecteur (1) peut avoir lieu dans une direction de déplacement,
dans lequel l'objet (4) comprend plusieurs éléments de détection (2, 3) différents dans une disposition définie les uns par rapport aux autres et par rapport à l'objet (4),
dans lequel le détecteur (1) comprend une fenêtre de lecture (5) pour la perception d'éléments de détection (2, 3) et
dans lequel une détermination de la position relative entre l'objet (4) et le détecteur (1) a lieu lors d'une reconnaissance d'un élément de détection (2, 3) perçu - en tenant compte de la disposition définie connue des éléments de détection (2, 3) les uns par rapport aux autres et par rapport à l'objet (4) - au moyen du détecteur (1) ou au moyen d'un dispositif de détermination interagissant avec le détecteur (1), dans lequel la détermination de la position relative entre l'objet (4) et le détecteur (1) n'a lieu que lors d'une reconnaissance de plusieurs éléments de détection (2, 3) perçus simultanément par la fenêtre de lecture (5),
**caractérisé en ce qu'**une géométrie plane de la fenêtre de lecture (5) et/ou une géométrie plane d'un élément de masquage disposé devant le détecteur (1), pour le masquage d'une partie prédéterminée de la lumière arrivant de l'objet (4) en direction de la fenêtre de lecture (5) du détecteur (1) est réalisée de sorte qu'une détermination de la position de la position relative entre l'objet (4) et le détecteur (1) est possible en ce qui concerne une rotation relative entre l'objet (4) et le détecteur (1) autour d'un axe de rotation.

2. Procédé selon la revendication 1, **caractérisé en ce qu'**une reconnaissance d'un ou plusieurs éléments de détection (2, 3) perçus par la fenêtre de lecture (5) a lieu au moyen du détecteur (1) ou au moyen d'un dispositif de reconnaissance interagissant avec le détecteur (1).

3. Procédé selon la revendication 1 ou 2, **caractérisé en ce que** la taille de la fenêtre de lecture (5), la disposition ou une densité de disposition des éléments de détection (2, 3) sur ou dans l'objet (4) et la distance entre la fenêtre de lecture (5) ou le détecteur (1) et l'objet (4) sont adaptées entre elles de sorte que plusieurs éléments de détection (2, 3) peuvent être reconnus simultanément.

4. Procédé selon l'une des revendications 1 à 3, **caractérisé en ce que** la détermination de la position relative entre l'objet (4) et le détecteur (1) a lieu en ce qui concerne un déplacement relatif entre l'objet (4) et le détecteur (1) dans une direction X et/ou une direction Y

5. Procédé selon l'une des revendications 1 à 4, **caractérisé en ce que** la détermination de la position relative entre l'objet (4) et le détecteur (1) a lieu en ce qui concerne une distance entre l'objet (4) et le détecteur (1), de préférence dans une direction Z.

6. Procédé selon l'une des revendications 1 à 5, **caractérisé en ce que** la détermination de la position relative entre l'objet (4) et le détecteur (1) a lieu en ce qui concerne une rotation relative entre l'objet (4) et le détecteur (1) autour d'un axe de rotation, de préférence un axe Z.

7. Procédé selon l'une des revendications 1 à 6, **caractérisé en ce qu'**une géométrie d'une surface éclairée, nécessaire pour une perception des éléments de détection (2, 3) par le détecteur (1), de l'objet (4) et/ou un masquage électronique de la fenêtre de lecture (5) sont réalisés de sorte qu'une détermination de la position relative entre l'objet (4) et le détecteur (1) a lieu en ce qui concerne une rotation relative entre l'objet (4) et le détecteur (1) autour d'un axe de rotation est possible.

8. Procédé selon la revendication 7, **caractérisé en ce que** la géométrie de la surface éclairée est réalisée de sorte que celle-ci, lors d'une rotation autour d'une normale quelconque choisie sur la surface éclairée arrive à nouveau en recouvrement uniquement lors d'une rotation de 360°.

9. Procédé selon l'une des revendications 1 à 8, **caractérisé en ce que** la géométrie de la fenêtre de lecture (5) est réalisée de sorte que celle-ci, lors d'une rotation autour d'une normale quelconque choisie sur la géométrie plane de la fenêtre de lecture (5) arrive à nouveau en recouvrement uniquement lors d'une rotation de 360°.

10. Procédé selon l'une des revendications 1 à 9, **caractérisé en ce que** la géométrie de l'élément de masquage est réalisée de sorte que celle-ci, lors d'une rotation autour d'une normale quelconque choisie sur la géométrie plane de l'élément de masquage arrive à nouveau en recouvrement uniquement lors d'une rotation de 360°.

11. Procédé selon l'une des revendications 1 à 10 respectivement 7 à 10, **caractérisé en ce que** la géométrie de la surface éclairée et/ou la géométrie plane de la fenêtre de lecture (5) et/ou la géométrie de l'élément de masquage et/ou la géométrie du masquage électronique ne présente pas de symétrie ponctuelle ou de symétrie axiale ou n'est pas invariante lors d'un déplacement.

12. Procédé selon l'une des revendications 1 à 11, **caractérisé en ce qu'**une surface éclairée, nécessaire pour une perception des éléments de détection (2, 3) par le détecteur (1), de l'objet (4) est éclairée simultanément avec différentes longueurs d'ondes.

13. Procédé selon l'une des revendications 1 à 12, **caractérisé en ce qu'**au moins trois zones (6, 7) d'une surface éclairée, nécessaire pour une perception des éléments de détection (2, 3) par le détecteur (1), de l'objet (4) sont éclairées simultanément et respectivement avec différentes longueurs d'ondes.

14. Procédé selon l'une des revendications 1 à 13, **caractérisé en ce que** les éléments de détection (2, 3) sont disposés ou réalisés sur un côté supérieur de l'objet (4) et/ou
les éléments de détection (2, 3) sont des codes, plus particulièrement des Data Matrix Codes, des QR-codes ou des codes-barres et/ou
le procédé est réalisé en lien avec une détermination de position fiable.

15. Dispositif pour l'exécution d'un procédé de détermination de la position relative entre un objet (4) et un détecteur (1), de préférence pour l'exécution du procédé selon l'une des revendications 1 à 14, dans lequel un déplacement relatif entre l'objet (4) et le détecteur (1) peut avoir lieu dans une direction de déplacement,
dans lequel l'objet (4) comprend plusieurs éléments de détection (2, 3) différents dans une disposition définie les uns par rapport aux autres et par rapport à l'objet (4),
dans lequel le détecteur (1) comprend une fenêtre de lecture (5) pour la perception d'éléments de détection (2, 3) et
dans lequel une détermination de la position relative entre l'objet (4) et le détecteur (1) peut être effectuée lieu lors d'une reconnaissance d'un élément de détection (2, 3) perçu - en tenant compte de la disposition définie connue des éléments de détection (2, 3) les uns par rapport aux autres et par rapport à l'objet (4) - au moyen du détecteur (1) ou au moyen d'un dispositif de détermination interagissant avec le détecteur (1), dans lequel le dispositif de détermination est conçu pour ne déterminer la position relative entre l'objet (4) et le détecteur (1) que lors d'une reconnaissance de plusieurs éléments de détection (2, 3) perçus simultanément par la fenêtre de lecture (5),
**caractérisé en ce qu'**une géométrie plane de la fenêtre de lecture (5) et/ou une géométrie plane d'un élément de masquage disposé devant le détecteur (1), pour le masquage d'une partie prédéterminée de la lumière arrivant de l'objet (4) en direction de la fenêtre de lecture (5) du détecteur (1) est réalisée de sorte qu'une détermination de la position de la position relative entre l'objet (4) et le détecteur (1) est possible en ce qui concerne une rotation relative entre l'objet (4) et le détecteur (1) autour d'un axe de rotation.
